# EUROPEAN PATENT SPECIFICATION

(11) **EP 3 747 758 B1**
(45) Date of publication and mention of the grant of the patent: **29.05.2024**
(21) Application number: 19743852.6
(22) Date of filing: 29.01.2019
(51) Int. Cl.: B63H 25/04

(54) **SHIP-STEERING CONTROL DEVICE**
SCHIFFSLENKSTEUERVORRICHTUNG
DISPOSITIF DE COMMANDE DE DIRECTION DE NAVIRE

(30) Priority: 29.01.2018 JP 2018012804
(43) Date of publication of application: 09.12.2020
(73) Proprietor: Mitsui O.S.K. Lines, Ltd., Tokyo 105-8688 (JP); Kawasaki Jukogyo Kabushiki Kaisha, Hyogo 650-8670 (JP)
(72) Inventor: KOMI, Yoshiki, Tokyo 105-8688 (JP); TANAKA, Tatsuki, Kobe-shi, Hyogo 651-2239 (JP)
(74) Representative: Gill Jennings & Every LLP
(86) International application number: PCT/JP2019/002965
(87) International publication number: WO 2019/146798

(56) References cited:
- WO-A1-2016/037444
- JP-A- H05 270 491
- JP-A- H07 112 699
- JP-A- 2003 104 291
- JP-A- 2009 248 745
- JP-A- 2014 073 840
- JP-A- 2014 193 706
- JP-A- 2015 205 525
- US-A1- 2014 136 032

## Description

### Technical Field

The present invention relates generally to a ship steering control device which controls a ship steering machine of a ship.

### Background Art

In general, an automatic navigation control for automatically steering a ship is known. For example, as the automatic navigation control, it is disclosed that a rudder angle is determined to match a traveling direction relative to ground to a target direction and feedback control is performed to match the current rudder angle to the determined rudder angle (see Patent Literature 1).

However, in practice, due to disturbances caused by various natural phenomena such as currents, waves and wind, a hull is washed away or the orientation of a hull is changed. In addition, the response of a ship to a rudder angle changes depending on the draft of a ship or the submerged area of a rudder/propeller. Therefore, even if a rudder angle is determined to direct the course of a ship to a target point at a certain point, due to a disturbance, the course of the ship deviates from the target point as the ship travels. Consequently, a rudder needs to be turned again and again, and the ship sails in a meandering manner toward the target point. As a result, the ship sails an unnecessarily long distance.

In contrast, there is a control method of determining a rudder angle according to various marine conditions by learning a rudder angle determination method as an empirical rule by machine learning. However, even with this control method, in order to maintain an optical course against an ever-changing natural phenomenon at all times, the rudder needs to be frequently turned. Therefore, the operation efficiency of the rudder is degraded.

In another example, in order to reduce the switching hysteresis in an autopilot system for watercraft, an arrangement is provided for determining a force acting on a rudder for watercraft (see Patent Literature 2).

### Citation List

### Patent Literature

Patent Literature 1: JP 2003-226292 A
Patent Literature 2: JP 2014-073840 A T

### Summary of Invention

The present invention aim to provide a ship steering control device according to claim 1 which performs a control suitable for a disturbance caused by a natural phenomenon and a method according to claim 4.

### Solution to Problem

In accordance with the present invention, a ship steering control device includes angle difference calculation means of calculating an angle difference between a course of a ship and a target direction, rotation speed measurement means for measuring a rotation speed of a propeller of the ship, target load calculation means of calculating a target load serving as a target load to be applied to a rudder based on the angle difference calculated by the angle difference calculation means and the rotation speed measured by the rotation speed measurement means, load measurement means of measuring a load on the rudder measured by the load measurement means to the target load, a ship steering machine for turning the rudder, and ship steering control means of controlling a rudder angle by the ship steering machine to match the load on the rudder to the target load calculated by the target load calculation means.

### Brief Description of Drawings

FIG. 1 is a configuration diagram showing a configuration related to a rudder control in a ship according to a first example (not claimed).
FIG. 2 is a configuration diagram showing the configuration of a controller according to the first example.
FIG. 3 is a flowchart showing a control procedure by the controller according to the first example
FIG. 4 is a schematic diagram showing an angle difference between the course of the ship and a target direction according to the first example
FIG. 5 is a schematic diagram showing a target load of the ship according to the first example
FIG. 6 is a configuration diagram showing the configuration of a controller according to the present invention.
FIG. 7 is a correlation diagram showing the relationship between the rudder angle and the rotation speed of a ship according to the invention.
FIG. 8 is a correlation diagram showing the relationship between the main engine load and the rotation speed by the controller according to the invention.
FIG. 9 is a configuration diagram showing the configuration of a controller according to a second non claimed example.
FIG. 10 is a configuration diagram showing the configuration of a ship to which a sail is attached according to the second non claimed example.
FIG. 11 is a conceptual diagram showing an ideal course by a ship steering control according to the first example.
FIG. 12 is a correlation diagram showing the relationship between the rudder angle and the rudder load by the ship steering control according to the first example.
FIG. 13 is a correlation diagram showing the relationship among the rudder angle, the ROT and the rudder load by the ship steering control according to the first embodiment.
FIG. 14 is a correlation diagram showing the relationship between the rudder angle and the rudder load of the ship according to the first example.
FIG. 15 is a correlation diagram showing the relationship between the amplitude and the frequency of rolling of the ship by the ship steering control according to the first example.

### Mode for Carrying Out the Invention

### (First non claimed example)

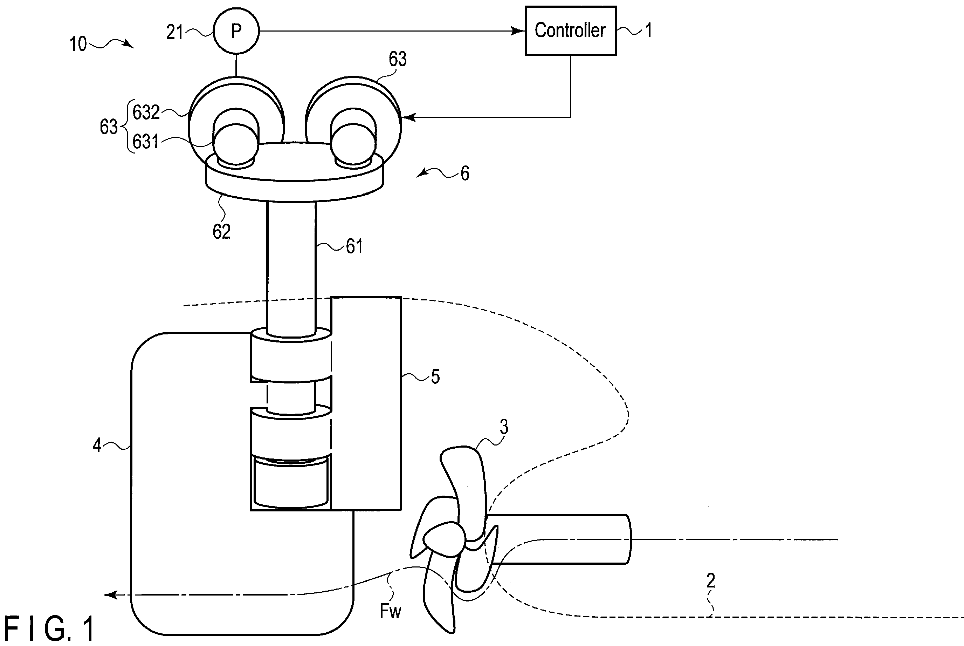

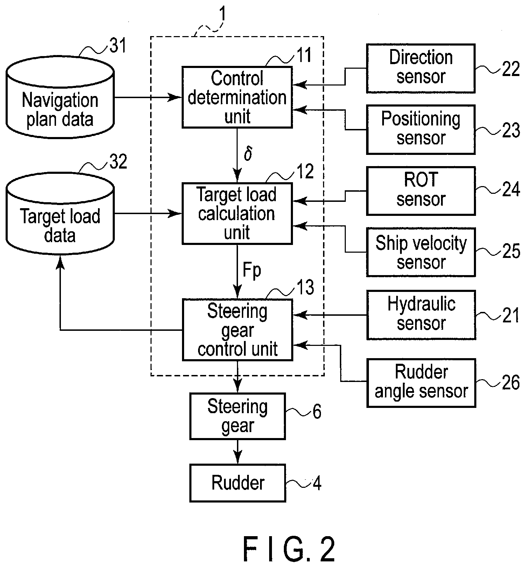

FIG. 1 is a configuration diagram showing a configuration related to the control of a rudder 4 in a ship 10 according to the first example. FIG. 2 is a configuration diagram showing the configuration of a controller 1 according to the present example. Note that the same parts in the drawings will be denoted by the same reference numbers and different parts will be mainly described.

The ship 10 is, for example, a large ship which sails on the sea while carrying people or goods. Note that the ship 10 can be anything as long as it travels while changing direction by operating a rudder in the water.

The ship 10 includes the controller 1, a hull 2, a propeller 3, the rudder 4, a support member 5, a ship steering machine 6, a hydraulic sensor 21, a direction sensor 22, a positioning sensor 23, a rate-of-turn (ROT) sensor 24, a ship velocity sensor 25, a rudder angle sensor 26, a navigation plan data storage unit 31, and a target load data storage unit 32.

The propeller 3 is disposed in a part sinking in the water in the rear part of the hull 2. When the propeller 3 is rotated by power from a main engine serving as a power source such as an engine, the propeller 3 generates a water flow Fw shown in FIG. 1. As a result, the ship 10 obtains a propulsive force.

The rudder 4 is a piece of ship equipment which changes the course of the ship 10 (the forward direction of the ship 10). The rudder 4 has the shape of a plate. When the ship 10 travels straight, the rudder 4 is parallel to the straight traveling direction of the ship 10 such that the rudder 4 does not generate a resistance to the water flow Fw generated by the propeller 3. The rudder 4 changes the course of the ship 10 by changing the angle of its flat part with respect to the traveling direction to change the direction of the water flow Fw generated by the propeller 3.

The support member 5 is a member which supports the rudder 4 behind the propeller 3 and attaches the rudder 4 to the hull 2 in such a manner that the angle of the rudder 4 is changeable.

The ship steering machine 6 is a piece of equipment which operates the rudder 4. The ship steering machine 6 operates the rudder 4 according to a command from the controller 1. For example, the ship steering machine 6 is a steering gear.

The ship steering machine 6 includes a rudder shaft 61, a rotary wing 62 and two hydraulic cylinders 63.

The rudder 4 is attached to the lower part of the rudder shaft 61. When the rudder shaft 61 is operated to rotate, the rudder 4 is turned and the angle of the rudder 4 is changed.

The rotary wing 62 has the shape of a circular plate and is attached to the upper part of the rudder shaft 61. The rotary wing 62 is operated to rotate by two hydraulic cylinders 63. Accordingly, the rudder shaft 61 is rotated with the rotary wing 62, and the angle of the rudder 4 is changed.

The hydraulic cylinder 63 is a piece of equipment in which a piston 631 is inserted in a cylinder 632. The hydraulic cylinder 63 functions as an actuator when the piston 631 is operated in the longitudinal direction by hydraulic pressure inside the cylinder 632. Two hydraulic cylinders 63 are arranged to be substantially parallel to each other. The ends of the pistons 631 of the two hydraulic cylinders 63 are fixed to both peripheral ends on the surface of the rotary wing 62, respectively. When the pistons 631 of the two hydraulic cylinders 63 are operated in opposite directions, the rotary wing 62 is rotated, and the angle of the rudder 4 is changed. The controller 1 controls the rudder 4 by controlling the hydraulic pressure inside the hydraulic cylinder 63.

The hydraulic sensor 21 measures the hydraulic pressure in the hydraulic cylinder 63. The hydraulic sensor 21 transmits the measurement value of the hydraulic pressure to the controller 1. As the load on the rudder 4 changes, the hydraulic pressure in the hydraulic cylinder 63 changes, accordingly. Therefore, the load on the rudder 4 can be measured by measuring the hydraulic pressure in the hydraulic cylinder 63. Note that the hydraulic sensor 21 may be provided for each of the two hydraulic cylinders 63. In addition, the sensor is not limited to a hydraulic sensor as long as it measures the load on the rudder 4. For example, a sensor which measures a load may be directly attached to the rudder 4, and a measurement result may be transmitted to the controller 1 by wired or wireless transmission.

The direction sensor 22 is a sensor which measures the current course of the ship 10. The positioning sensor 23 is a sensor which measures the current position of the ship 10. The ROT sensor 24 is a sensor which measures the current rate-of-turn R of the ship 10. The ship velocity sensor 25 is a sensor which measures the current velocity v of the ship 10. The rudder angle sensor 26 is a sensor which measures a rudder angle. Note that the sensors 21 to 26 can be anything as long as they perform intended measurement. For example, the sensors 22 to 25 may employ a gyrocompass or a satellite positioning system.

The navigation plan data storage unit 31 stores navigation plan data including information related to a planned route to a destination. The navigation plan data storage unit 31 transmits information included in the navigation plan data in response to a request from the controller 1.

The target load data storage unit 32 stores target load data including information related to a target load Fp. The target load Fp is a target value of a load to be applied to the rudder 4 for controlling the rudder 4, and is a command value for controlling the rudder 4 by the ship steering machine 6. The target load data storage unit 32 transmits information included in the target load data in response to a request from the controller 1. Since the target load data changes depending on the shape of the hull 2, the properties of the propeller and the like, the target load data is unique data which is different from one ship 10 to another. For example, the target load data is collected at the time of the trial operation of the ship 10 by a machine learning program or the like, and is updated as needed during the sailing of the ship 10.

The controller 1 includes a control determination unit 11, a target load calculation unit 12 and a ship steering control unit 13. Note that the controller 1 may be provided anywhere in the ship 10, may be provided for any purpose, and may be configured in any manner. For example, the controller 1 may be a ship steering control device which controls the ship steering machine 6 or may be an automatic navigation control device (for example, an autopilot) which automatically steers the ship 10. In addition, the controller 1 may be provided in the vicinity of the ship steering machine 6 or may be provided as a part of the ship steering machine 6, or may be provided on the ship such as in an engine room or a steering room. Furthermore, the controller 1 may include the respective sensors 21 to 26 and the respective storage units 31 and 32 as a part of the configuration.

The control determination unit 11 determines whether or not to perform the control of the rudder 4 based on the navigation plan data stored in the navigation plan data storage unit 31 and the measurement results measured by the respective sensors 21 to 26. When the control determination unit 11 determines to perform the control, the control determination unit 11 outputs necessary information with a command for starting the control to the target load calculation unit 12.

When the target load calculation unit 12 receives the command for starting the control from the control determination unit 11, the target load calculation unit 12 calculates a target load Fp. The target load calculation unit 12 calculates a target load Fp based on the measurement results by the respective sensors 21 to 26 and the target load data obtained from the target load data storage unit 32. The turning direction of the rudder 4 may be represented by the sign of the target load Fp or may be represented by a command value different from the target load Fp. The target load calculation unit 12 outputs the calculated target load Fp to the ship steering control unit 13.

The ship steering control unit 13 performs a control to match the load on the rudder 4 to the target load Fp based on the target load Fp received from the target load calculation unit 12 and the hydraulic pressure measured by the hydraulic sensor 21. When the load on the rudder 4 reaches the target load Fp, the ship steering control unit 13 notifies the control determination unit 11 that the control has completed.

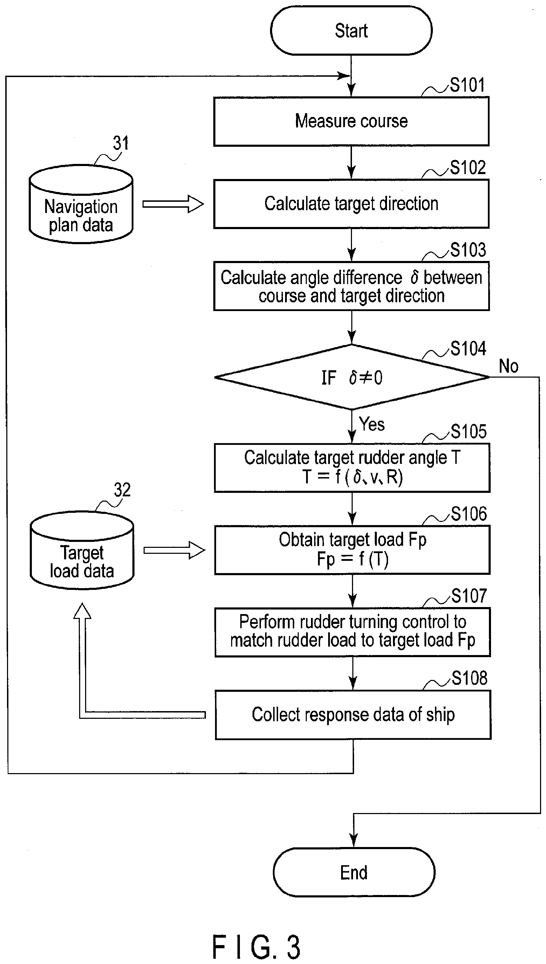

FIG. 3 is a flowchart showing a control procedure by the controller 1 according to the first example.

The control determination unit 11 measures the course of the ship 10 based on the direction measured by the direction sensor 22 (Step S101).

The control determination unit 11 calculates a target direction based on the current position measured by the positioning sensor 23 and the navigation plan data received from the navigation plan data storage unit 31 (Step S102). The target direction is a course which the ship 10 should take at present to sail according to a navigation plan to reach a destination.

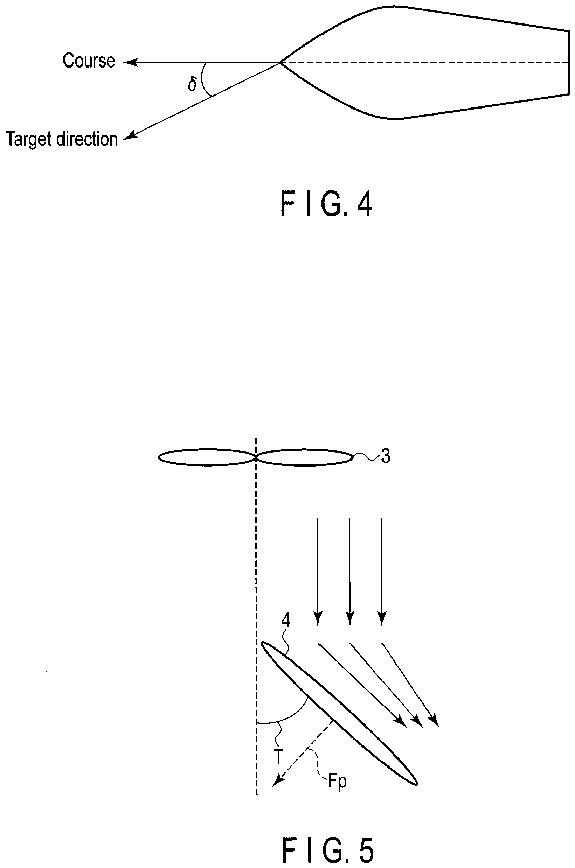

The control determination unit 11 calculates an angle difference δ between the course and the target direction shown in FIG. 4 (Step S103).

The control determination unit 11 determines whether the angle difference δ is zero or not (Step S104). When the angle difference δ is zero, the control determination unit 11 does not operate the rudder 4. Here, zero indicates a value which determines that the course and the target direction match, and may not be exactly zero but can be any value as long as it determines that the rudder 4 does not need to be turned. In addition, with regard to the angle difference δ, a range where the rudder 4 does not need to be turned may be set. When the angle difference δ is not zero, the control determination unit 11 notifies the target load calculation unit 12 of the start of the turning control of the rudder 4 and transmits the calculated angle difference δ to the target load calculation unit 12.

The target load calculation unit 12 calculates a target rudder angle T based on the angle difference δ received from the control determination unit 11, the rate-of-turn R measured by the ROT sensor 24, and the ship velocity v measured by the ship velocity sensor 25 (Step S105). Here, the target rudder angle T is a turning angle of the rudder 4 which is not obtained with consideration of disturbances caused by natural phenomena such as marine conditions or weather conditions but is theoretically obtained to match the course to the target direction. For example, the target rudder angle T may be a rudder angle obtained by a method which is conventionally used for controlling the rudder 4. Note that the target rudder angle T may be obtained in any manner.

The target load calculation unit 12 calculates the target load Fp based on the calculated target rudder angle T and the target load data received from the target load data storage unit 32 (Step S106). For example, the target load Fp is a command value for a load which the water flow output from the propeller 3 applies perpendicularly to the flat part of the rudder 4 as shown in FIG. 5. For example, the target load data includes information for obtaining an optimal load to be applied to the rudder 4 at the present moment with consideration of disturbances caused by natural phenomena to set the rudder 4 to the target rudder angle T. The target load calculation unit 12 obtains the target load Fp by converting the target rudder angle T to the target load Fp using the target load data. Since the target load data is used, disturbances are taken into consideration. Therefore, a rudder angle at which the load on the rudder 4 matches the target load Fp does not necessarily match the target rudder angle T. The target load calculation unit 12 outputs the calculated target load Fp to the ship steering control unit 13.

When the target load Fp is obtained by the target load calculation unit 12, the target load Fp may be corrected by measuring marine data such as water flows and waves and weather data such as wind and temperature and using the measurement results as parameters.

The ship steering control unit 13 obtains the current load on the rudder 4 from the hydraulic pressure measured by the hydraulic sensor 21. The ship steering control unit 13 performs the turning control of the rudder 4 to match the load on the rudder 4 to the target load Fp (Step S107). For example, the ship steering control unit 13 continues turning the rudder 4 until the load obtained from the hydraulic pressure measured by the hydraulic sensor 21 matches the target load Fp.

When the load on the rudder 4 reaches the target load Fp, the ship steering control unit 13 collects response data of the ship 10 by the series of controls based on the measurement results by the respective sensors 21 to 26 (Step S108). The ship steering control unit 13 stores the collected response data in the target load data storage unit 32. Accordingly, the target load data is updated and reflected in the next calculation of the target load Fp. When these processes end, the ship steering control unit 13 notifies the control determination unit 11 that the control has completed.

According to the present example, it is possible to improve the operation efficiency of the rudder 4 by determining the target load Fp and performing the turning control of the rudder 4 to match the load on the rudder 4 to the target load Fp as compared to the case of performing the control to set the rudder 4 to a target rudder angle.

For example, due to disturbances such as wind or water flows, the ship 10 may be washed away or turned around, and the course may be changed. In such a case, even though the rudder 4 is not turned, the ship 10 may travel in the target direction due to disturbances.

However, if the rudder angle is determined to match the course to the target direction and the rudder 4 is controlled to set the rudder 4 to the determined rudder angle, the rudder 4 is always turned by the determined rudder angle. When the rudder 4 is turned in such a manner, the ship 10 turns more than necessary, and an overshoot occurs, that is, the course changes beyond the target direction.

On the other hand, as in the present example, when the load on the rudder 4 is measured by the hydraulic sensor 21 and the control is performed to match the load on the rudder 4 to the target load Fp, the control can be performed to reduce the turning angle of the rudder 4 or to keep the rudder angle of the rudder 4 constant. The load on the rudder 4 is influenced by disturbances, and since the load is measured and used for the control, the control with consideration of disturbances can be performed. Accordingly, the turning angle and the number of turns of the rudder 4 can be reduced.

In addition, when the load on the rudder 4 and the target load Fp match due to disturbances, even if the course and the target direction do not match, the rudder 4 does not need to be turned. Therefore, even if the course and the target direction do not match, the ship 10 is expected to travel in the target direction using disturbances without turning the rudder 4. Such a situation occurs, for example, when a force which needs to be applied to the ship 10 for turning the ship 10 in the absence of a disturbance is balanced against the disturbance.

Furthermore, when a disturbance acts in a direction in which the course deviates from the target direction, it is possible to reduce the number of turns or the operation time of the rudder 4 by performing the control to match the load on the rudder 4 to the target load Fp as compared to the case of performing the control to set the rudder 4 to the determined rudder angle. Consequently, it is possible to reduce the detour distance of the ship 10 by the influence of disturbance and to improve the operation efficiency of the rudder 4 and the fuel efficiency of the ship 10.

In the present example, the target rudder angle T is obtained, and then the target load Fp is obtained. However, the target rudder angle T may not be obtained but the target load Fp may be directly obtained using a parameter for obtaining the target rudder angle T. For example, a parameter suitable for the current situation of the ship 10 may be obtained, and the target load Fp may be obtained from the obtained parameter using the target load data storage unit 32 in which empirical rules learned in the trial operation or during the actual sailing are stored as data.

### (Present invention)

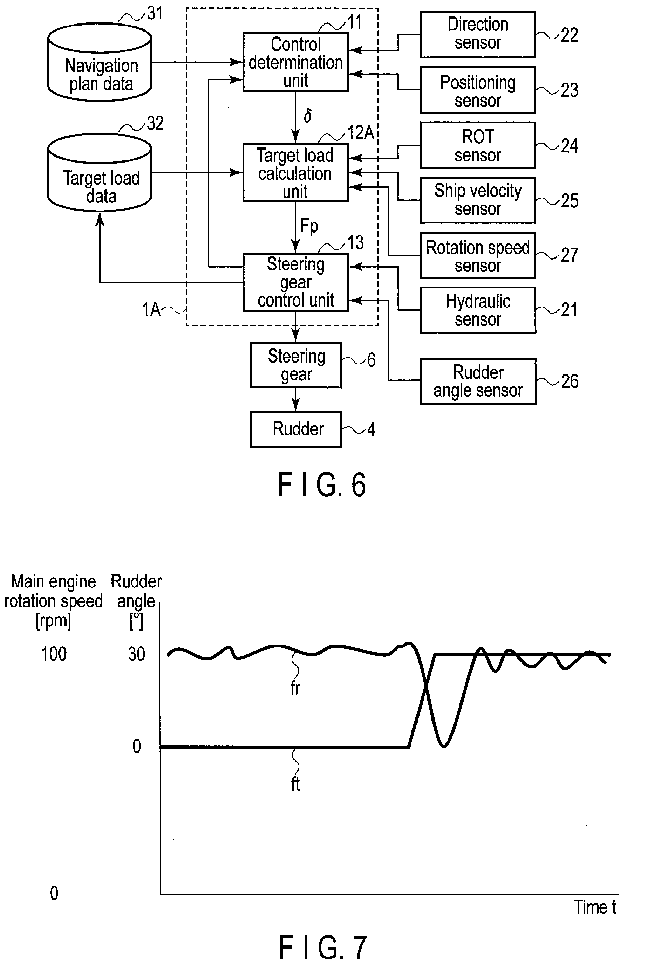

FIG. 6 is a configuration diagram showing the configuration of a controller 1A according to the present invention.

The controller 1A is based on the controller 1 according to the first example shown in FIG. 2, but a measurement result by a rotation speed meter 27 installed in the ship 10 is received, and the target load calculation unit 12 is replaced with a target load calculation unit 12A. The other points are the same as the first example. Different parts from the first example will be mainly described.

The rotation speed meter 27 measures the rotation speed of an engine serving as a main engine. The rotation speed meter 27 transmits the measured rotation speed to the controller 1A. It is not limited to something which directly measures a rotation speed such as the rotation speed meter 27 but may be something which can grasp the state of an engine serving as a propulsor or something which can predict and measure a rotation speed to some extent.

The target load calculation unit 12A obtains a final target load FpA with consideration of the rotation speed measured by the rotation speed meter 27 with respect to the target load Fp obtained in substantially the same manner as the first example. More specifically, the target load FpA is determined such that the rotation speed does not suddenly change or the rotation speed does not decrease too much.

Next, a method of obtaining the target load FpA will be described.

FIG. 7 is a correlation diagram showing the relationship between the rudder angle of the rudder 4 and the rotation speed in the ship 10. A graph fr shows the rotation speed of the engine serving as the main engine. A graph ft shows the rudder angle.

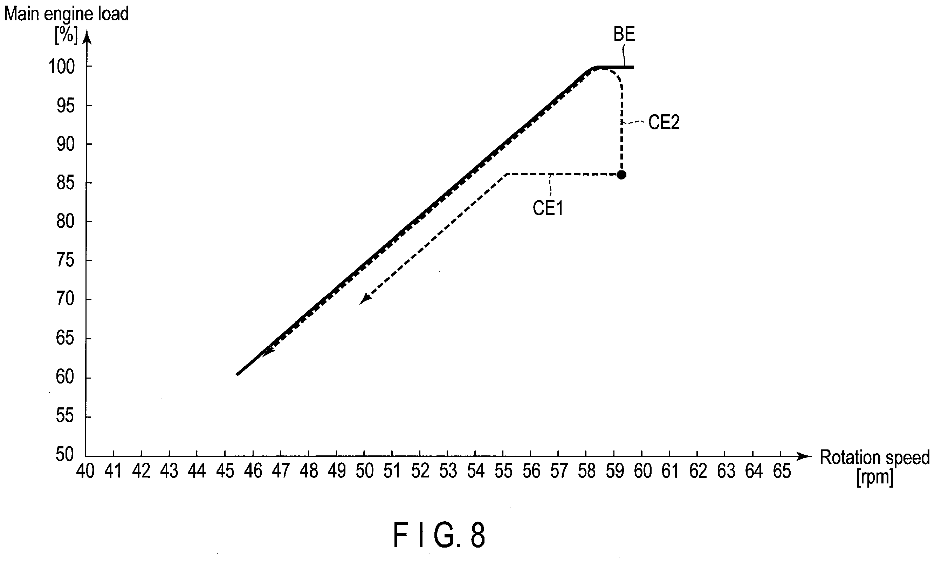

FIG. 8 is a correlation diagram showing the relationship between the main engine load (engine load, for example, fuel injection amount) and the rotation speed by the controller 1A. A boundary BE indicates the boundary between an overload region of the engine of the ship 10 and the other region. That is, the region above the boundary BE indicates the overload region of the engine. A graph CE1 shows the relationship between the main engine load and the rotation speed by the controller 1A. A graph CE2 shows the relationship between the main engine load and the rotation speed by a conventional controller for the sake of comparison with the present embodiment.

As shown in FIG. 7, when the rudder angle is sharp and if the ship is sharply turned, for example, from zero, which is a straight traveling state, to 35 degrees by the resistance increase of the propeller by the turning of the rudder 4 and the resistance increase of the engine by the turning of the hull, the rotation speed of the engine is sharply reduced from about 59 rpm to about 45 rpm.

At this time, in the conventional control, as shown in the graph CE2 of FIG. 8, the load and the rotation speed of the engine change, and the load on the engine increases once after the rudder 4 is turned, and changes along the boundary BE of the region which is generally considered as an overload for the engine. On the other hand, in the present embodiment, as shown in the graph CE1 of FIG. 8, the load on the rudder 4 is controlled according to the state of the engine or the load on the engine is controlled according to the load on the rudder 4 and the ROT of the ship 10, and the time the engine spends at the boundary BE of the overload for the engine can be shortened. Therefore, the target load FpA is determined such that the rotation speed does not suddenly change or the change width of the rotation speed falls within a certain range (for example, the change rate falls within a range of ±10%). In addition, when the target load FpA is high, the load on the engine is kept constant, and the load increase is reduced.

In some cases, the minimum rotation speed necessary for the engine to continue rotating is specified. If the rotation speed falls below the minimum rotation speed, the engine stops. Therefore, the target load FpA is determined such that the rotation speed does not fall below the minimum rotation speed.

Note that the target load FpA may be obtained in such a manner that both of the change rate and the minimum value of the rotation speed satisfy predetermined conditions or one of them satisfies a predetermined condition.

According to the present embodiment, it is possible to achieve not only the functions and effects by the first example but also the following functions and effects. That is, it is possible to reduce the load on the rudder 4 or the engine at the time of turning the rudder 4 by determining the target load FpA with consideration of the rotation speed of the engine serving as the main engine.

In addition, the above-described control can avoid an excessive skid (drift) of the ship and minimize speed reduction after a course change by a skid.

### (Second non claimed example)

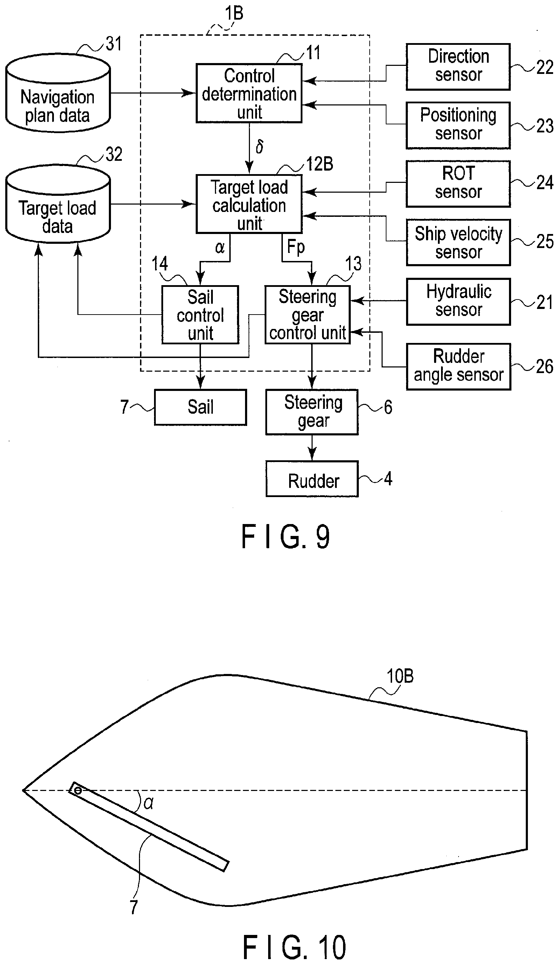

FIG. 9 is a configuration diagram showing the configuration of a controller 1B according to the second example. FIG. 10 is a configuration diagram showing the configuration of a ship 10B to which a sail 7 is attached according to the second example.

The ship 10B is based on the ship 10 according to the first example, but a sail 7 is attached, and the controller 1 is replaced with a controller 1B. The controller 1B is based on the controller 1 according to the first embodiment shown in FIG. 2, but a sail control unit 14 is added and the target load calculation unit 12 is replaced with a target load calculation unit 12B. The other points are the same as the first embodiment. Different parts from the first embodiment will be mainly described.

The sail 7 is a fore-and-aft sail attached to the front part of the ship 10. The sail 7 converts a wind force to a propulsive force in the same manner as the principle of obtaining a lift force of an airplane wing. A fore-and-aft sail is superior in turning performance than a square sail, and can obtain a propulsive force in a windward direction.

Note that the sail 7 may be a square sail or any other sail. In addition, the sail 7 may be formed of any material such as fiber, resin or metal, may have any properties such as elasticity or rigidity, may be in any form such as the form of cloth or the form of an airplane wing, and may not be attached to the front part but may be attached to any position of the ship 10. The sail 7 may have a configuration suitable for the shape, the usage, the usage environment and the like of the ship 10.

Base on the measurement results by the respective sensors 21 to 26 and the target load data obtained from the target load data storage unit 32, the target load calculation unit 12B calculates a target load FpB substantially in the same manner as the first example, and also calculates a target angle α serving as a command value for controlling the sail 7. The target angle α is a command value for an angle formed by a center line located at the center in the width direction of the ship 10 and the sail 7 or a support member which supports the sail 7 as shown in FIG. 10. Note that the target angle α can be a command value for any angle as long as it determines the position of the sail 7.

The sail control unit 14 operates the sail 7 to match the angle of the sail 7 to the target angle α calculated by the target load calculation unit 12B. The sail control unit 14 may not be provided and the sail 7 may be manually operated to set the angle of the sail 7 to the target angle α.

According to the second example, it is possible to achieve not only the functions and effects by the first example but also the following functions and effects. That is, it is possible to improve the mobility or the traveling performance of the ship 10 by providing the sail 7 and operating the sail 7 with the rudder 4.

Here, although the configuration has been explained based on the configuration of the first example, when the sail 7 is provided and the rudder 4 and the sail 7 are controlled with consideration of the rotation speed in the invention as a base configuration, it is possible to achieve the effects of the invention and improve the mobility or the traveling performance of the ship 10.

In addition, the target load calculation unit 12B may not calculate the target angle α but may determine the operation angle of the sail 7 in advance, may input the operation angle as a parameter, and may calculate the target load FpB. In this configuration also, it is possible to improve the mobility or the traveling performance of the ship 10 more than the first example by using the sail 7.

### (Functions and effects)

Specific examples of the functions and effects by performing the ship steering control by determining the target load Fp and turning the rudder 4 to match the load on the rudder 4 (rudder load) to the target load Fp in the first example will be described below. In the other embodiments also, substantially the same functions and effects can be obtained. In the respective embodiments, it is not always necessary to obtain all the functions and effects.

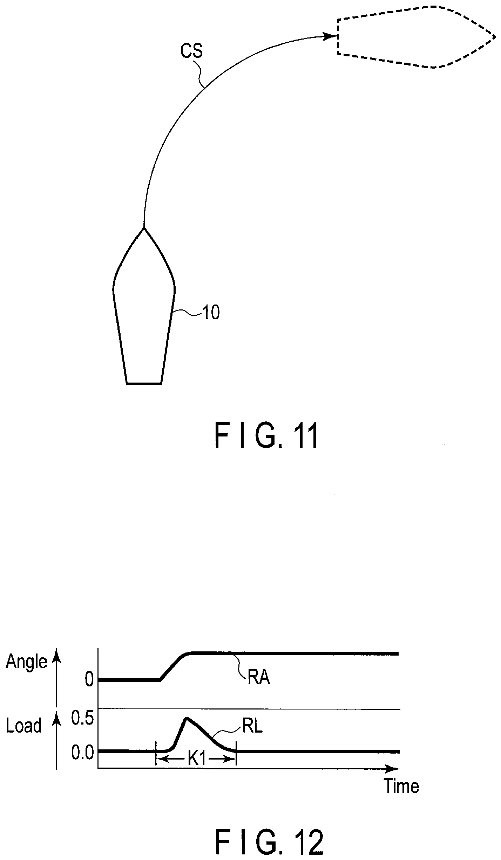

As shown in FIG. 11, the case of steering the ship 10 to turn the ship 10 to the right along an ideal course CS will be described.

In general, the ship starts turning with a lag after the rudder 4 is turned. Therefore, the ROT is maximized a predetermined time (for example, 40 seconds in the case of a large blunt ship) after the rudder 4 is turned. Consequently, when the rudder 4 is conventionally controlled based on the measurement result of the course or the ROT, due to the lag of the predetermined time, the control is delayed and it is difficult to steer the ship along the ideal course CS.

On the other hand, in the present example, as shown in FIG. 12, the rudder load is controlled to match the graph RL, and the rudder 4 is controlled such that the rudder angle matches the graph RA, accordingly. In FIG. 12, the horizontal axis represents time, the vertical axis of the graph RA showing the rudder angle represents the angle, and the vertical axis of the graph RL showing the rudder load represents the load (ratio, 0.1 = 10%).

That is, even under conditions where the steerage is different from what it normally is due to a marine climate, a geographical impact or the like, it is possible to perform an accurate control by applying an ideal rudder load such as a waveform shape in a section K1 of the graph RA. As a result, the ship 10 turns along the ideal course CS shown in FIG. 11. Therefore, it is possible to steer the ship 10 along the ideal course CS without excessively or insufficiently turning the rudder 4.

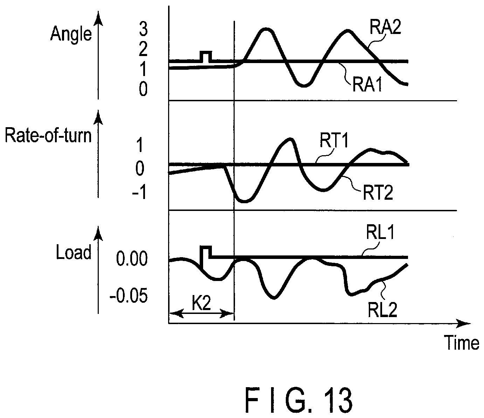

Next, the relationship among the rudder angle, the ROT and the rudder load will be described with reference to FIG. 13. Graphs RA1, RT1 and RL1 show the rudder angle, the ROT and the rudder load in the ship steering control according to the present example, respectively. Graphs RA2, RT2 and RL2 show the conventional rudder angle, the conventional ROT and the conventional rudder load for the sake of comparison with the present example, respectively. In FIG. 13, the horizontal axis represents time, the vertical axes of the graphs RA1 and RA2 showing the rudder angles represent the angles (degrees), and the vertical axes of the graphs RT1 and RT2 showing the ROTs represent the ROTs (degrees/minute), and the vertical axes of the graphs RL1 and RL2 showing the rudder loads represent the loads (ratios, 0.01 = 1%).

In a section K2, in the conventional control, as shown in the graphs RA2 and RT2, both the rudder angle and the ROT are stable. In such a state, when the rudder load shown in the graph RL2 is applied by a disturbance such as an ocean current, as shown in the graphs RA2 and RT2, it is necessary to perform a control to stabilize the course by repeating the switching of the rudder angle.

On the other hand, in the present example, in the section K2, as shown in the graphs RA1, RT1 and RL1 (substantially the same as RL2 at an early stage in the drawing), when a rudder load is applied, a rudder load is applied in an opposite direction to cancel this rudder load. As a result, the ROT is continuously stabilized, and the rudder angle is continuously minimized. Accordingly, in the present example, since the rudder load is constantly monitored for controlling the rudder load, the above-described control can be performed.

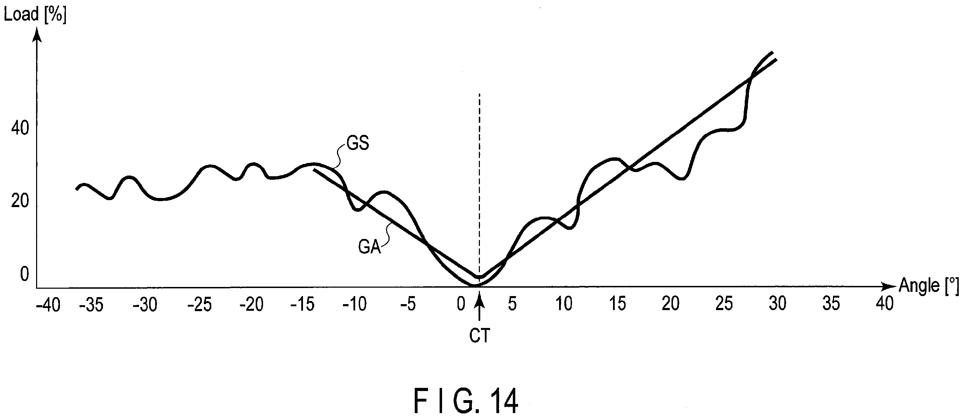

Next, the relationship between the rudder angle and the rudder load during the operation of the ship 10 will be described with reference to FIG. 14. A graph GS shows the relationship between the rudder angle and the rudder load. A graph GA shows the linearly-approximated relationship between the rudder angle and the rudder load. In FIG. 14, the horizontal axis represents the angle (degrees) and the vertical axis represents the load (%).

As shown in the graph GA, a center CT of the balance between the rudder angle and the rudder load of the ship 10 is located on the right side with respect the position of the rudder angle of 0 degrees. Therefore, even if the rudder 4 is set to the straight traveling direction first, a rudder force is generated and the ship 10 is turned to one side. In a general ship, the center of the balance of the rudder load is not located at the position of the rudder angle of 0 degrees, and the center CT varies depending on the state of the ship. Therefore, in the conventional ship steering control by the rudder angle, if the control is centered on the rudder angle of 0 degrees, setting the rudder angle to 0 degrees as much as possible at the time of traveling straight and returning the ship 10 to the straight traveling direction are repeated, and hunting may occur and the rudder 4 of the ship 10 may be periodically operated.

On the other hand, in the present example, the rudder load is controlled. Therefore, even if the center of the balance of the rudder load is not located at the position of the rudder angle of 0 degrees, the center CT is constantly grasped, and the ship 10 is controlled to constantly travel straight. Consequently, the operation of periodically changing the rudder angle of the rudder 4 will not be performed.

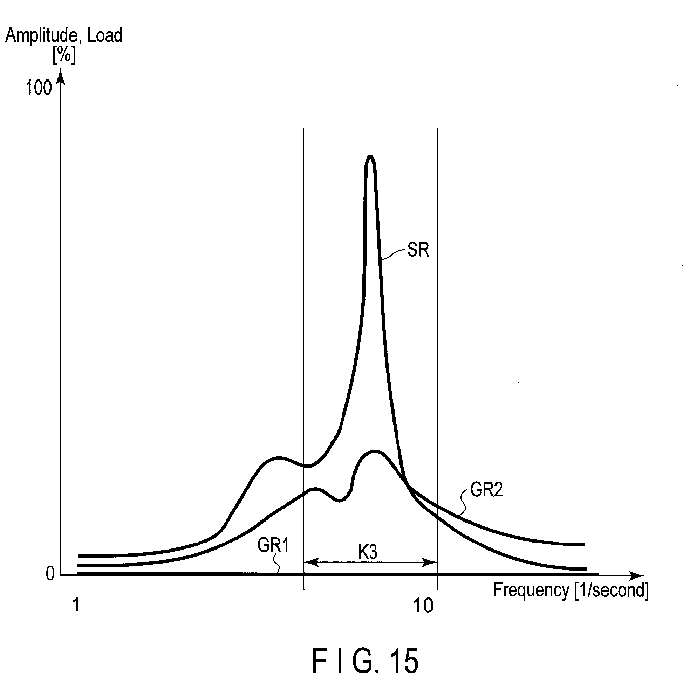

Next, the relationship between the relationship between the roll and the rudder load of the ship 10 will be described with reference to FIG. 15. A graph SR shows the relationship between the amplitude and the frequency of the rolling of the ship 10. A graph GR1 shows the relationship between the amplitude and the frequency of the rudder load by the ship steering control according to the present example. A graph GR2 shows the relationship between the amplitude and the frequency of the rudder load by the conventional ship steering control. In FIG. 15, the vertical axis represents the ratio (%) of the amplitude or the load to the maximum value, and the horizontal axis represents the frequency (1/second).

As shown in a frequency band K3, the peak of the graph GR2 showing the amplitude of the rudder load by the conventional ship steering control and the peak of the graph SR showing the amplitude of the rolling of the ship 10 substantially match. Accordingly, in the conventional ship steering control, a rudder load is applied by the rolling of the ship 10.

On the other hand, in the ship steering control according to the present example, when the target load Fp is zero, the rudder angle is controlled such that no rudder load is applied. Therefore, regardless of the amplitude of the rolling shown in the graph SR, the control is performed to set the rudder load to zero as shown in the graph GR1. Consequently, the rudder load applied by the rolling can be suppressed, and the operation efficiency of the ship 10 can be improved.

Note that the present invention is not limited to the above-described embodiments . The scope of the present invention is nevertheless defined by the claims.

## Claims

1. A ship steering control device (1A) comprising:
angle difference calculation means (11) for calculating an angle difference (δ) between a course of a ship and a target direction;
rotation speed measurement means (27) for measuring a rotation speed of a propeller of the ship;
target load calculation means (12A) of calculating a target load (Fp) serving as a target load to be applied to a rudder based on the angle difference (δ) calculated by the angle difference calculation means (27) and the rotation speed measured by the rotation speed measurement means (27);
load measurement means (21) for measuring a load on the rudder;
a ship steering machine (6) for turning the rudder; and
ship steering control means (13) for controlling a rudder angle by the ship steering machine (6) to match the load on the rudder measured by the load measurement means (21) to the target load (Fp) calculated by the target load calculation means (12A).

2. The ship steering control device (1A) of claim 1, **characterized by** further comprising target load data storage means (32) of storing target load data for obtaining the target load suitable for a disturbance caused by a natural phenomenon, wherein the target load calculation means (12A) calculates the target load (Fp) based on the target load data stored in the target load data storage means (32).

3. A ship comprising a rudder (5) and a propeller (3) **characterized by** further comprising a ship steering control device according to claim 1.

4. A ship steering control method **characterized by** comprising;
calculating an angle difference (δ) between a course of a ship and a target direction;
measuring a rotation speed of a propeller of the ship;
calculating a target load (Fp) serving as a target load to be applied to a rudder based on the calculated angle difference (δ) and the measured rotation speed
measuring a load on the rudder; and
controlling a rudder angle by a ship steering machine (6) for turning the rudder to match the measured load on the rudder to the calculated target load.

## Patentansprüche

1. Schiffslenksteuervorrichtung (1A), umfassend:
ein Winkeldifferenzberechnungsmittel (11) zum Berechnen einer Winkeldifferenz (δ) zwischen einem Kurs eines Schiffes und einer Zielrichtung;
ein Drehzahlmessmittel (27) zum Messen einer Drehzahl eines Propellers des Schiffes;
ein Ziellastberechnungsmittel (12A) zum Berechnen einer Ziellast (Fp), die als eine Ziellast dient, die auf ein Ruder aufzubringen ist, auf Grundlage der Winkeldifferenz (δ), die durch das Winkeldifferenzberechnungsmittel (27) berechnet wird, und der Drehzahl, die durch das Drehzahlmessmittel (27) gemessen wird;
ein Lastmessmittel (21) zum Messen einer Last auf dem Ruder;
eine Schiffslenkmaschine (6) zum Drehen des Ruders; und
ein Schiffslenksteuermittel (13) zum Steuern eines Ruderwinkels durch die Schiffslenkmaschine (6), um die Last auf dem Ruder, die durch das Lastmessmittel (21) gemessen wird, an die Ziellast (Fp), die durch das Ziellastberechnungsmittel (12A) berechnet wird, anzupassen.

2. Schiffslenksteuervorrichtung (1A) nach Anspruch 1, **dadurch gekennzeichnet, dass** sie ferner ein Ziellastdatenspeichermittel (32) zum Speichern von Ziellastdaten umfasst, um die Ziellast zu erlangen, die für eine Störung geeignet ist, die durch ein natürliches Phänomen verursacht wird, wobei das Ziellastberechnungsmittel (12A) die Ziellast (Fp) auf Grundlage der Ziellastdaten, die in dem Ziellastdatenspeichermittel (32) gespeichert sind, berechnet.

3. Schiff, umfassend ein Ruder (5) und einen Propeller (3), **dadurch gekennzeichnet, dass** es ferner eine Schiffslenksteuervorrichtung nach Anspruch 1 umfasst.

4. Schiffslenksteuerverfahren, **dadurch gekennzeichnet, dass** es Folgendes umfasst:
Berechnen einer Winkeldifferenz (δ) zwischen einem Kurs eines Schiffes und einer Zielrichtung;
Messen einer Drehzahl eines Propellers des Schiffes;
Berechnen einer Ziellast (Fp), die als eine Ziellast dient, die auf ein Ruder aufzubringen ist, auf Grundlage der berechneten Winkeldifferenz (δ) und der gemessenen Drehzahl;
Messen einer Last auf dem Ruder; und
Steuern eines Ruderwinkels durch eine Schiffslenkmaschine (6) zum Drehen des Ruders, um die gemessene Last auf dem Ruder an die berechnete Ziellast anzupassen.

## Revendications

1. Organe de commande de gouverne de navire (1A) comprenant
un dispositif de calcul de différence angulaire (11) pour calculer une différence angulaire (δ) entre le cours d'un navire et une direction cible ;
un dispositif de mesure de la vitesse de rotation (27) pour mesurer une vitesse de rotation d'une hélice du navire ;
un dispositif de calcul de la charge cible (12A) pour le calcul d'une charge cible (Fp) servant de charge cible appliquée à un gouvernail d'après la différence angulaire (δ) calculée par le dispositif de mesure de la vitesse de rotation (27), et la vitesse de rotation mesurée par le dispositif de mesure de la vitesse de rotation (27) ;
un dispositif de mesure de la charge (21) pour mesurer une charge sur le gouvernail ;
un servomoteur de barre (6) permettant de tourner le gouvernail ; et
un dispositif de commande de gouverne du navire (13) assurant le réglage de l'angle de gouvernail par le servomoteur de barre (6) afin d'assortir la charge sur le gouvernail, mesurée par le dispositif de mesure de la charge (21), à la charge cible (Fp) calculée par le dispositif de calcul de la charge cible (12A).

2. Organe de commande de gouverne de navire (1A) selon la revendication 1 **caractérisé en ce qu'**il comprend en outre un dispositif de mémorisation des données sur la charge cible (32) permettant d'obtenir la charge cible appropriée à la suite de perturbations causées par un phénomène naturel, le dispositif de calcul de la charge cible (12A) calculant la charge cible (Fp) sur la base des données sur la charge cible placées dans le dispositif de mémorisation des données sur la charge cible (32).

3. Navire comprenant un gouvernail (5) et une hélice (3), **caractérisé en ce qu'**il comprend en outre un organe de commande de gouverne de navire selon la revendication 1.

4. Procédé de commande de gouverne de navire **caractérisé en ce qu'**il comprend :
le calcul d'une différence angulaire (δ) entre le cours d'un navire et une direction cible ;
la mesure de la vitesse de rotation d'une hélice du navire ;
le calcul d'une charge cible (Fp) servant de charge cible devant être appliquée sur un gouvernail d'après la différence angulaire (δ) calculée et
la vitesse de rotation mesurée mesurant une charge sur le gouvernail ; et
le réglage de l'angle d'un gouvernail par un servomoteur de barre (6) pour la rotation du gouvernail, afin d'assortir la charge mesurée sur le gouvernail à la charge cible calculée.
